# EUROPEAN PATENT SPECIFICATION

(11) **EP 3 780 367 B1**
(45) Date of publication and mention of the grant of the patent: **18.11.2026**
(21) Application number: 20190547.8
(22) Date of filing: 11.08.2020
(51) Int. Cl.: H02M 1/36, H02M 1/42

(54) **NEUTRAL-LESS POWER SUPPLY WITH BUCK CONVERTER**
NEUTRALLOSE STROMVERSORGUNG MIT ABWÄRTSWANDLER
ALIMENTATION ÉLECTRIQUE SANS NEUTRE DOTÉE D'UN ABAISSEUR DE TENSION

(30) Priority: 12.08.2019 US 201962885410 P
(43) Date of publication of application: 17.02.2021
(73) Proprietor: eldoLAB Holding B.V., 5692 ED Son en Breugel (NL)
(72) Inventor: VAN HORCK, Franciscus Bernardus Marie, 5692 ED Son en Breugel (NL); SAES, Marc Paul, 5692 ED Son en Breugel (NL)
(74) Representative: EP&C

(56) References cited:
- EP-A1- 2 879 285
- DE-U1- 202017 004 950
- GB-A- 2 534 816
- US-B1- 8 629 631
- "LOW LOSS-TYPE STARTER CIRCUIT FOR SWITCHING MODE POWER SUPPLY", IBM TECHNICAL DISCLOSURE BULLETIN, INTERNATIONAL BUSINESS MACHINES CORP. (THORNWOOD), US, vol. 31, no. 5, 1 October 1988 (1988-10-01), pages 424/425, XP000023170, ISSN: 0018-8689
- JOHNNIE STARK ET AL: "Interior design students perceptions of sustainability", INTERNATIONAL JOURNAL OF SUSTAINABILITY IN HIGHER EDUCATION, 3 May 2016 (2016-05-03), Bradford, pages 361 - 377, XP055493256, Retrieved from the Internet <URL:https://www.ti.com/seclit/ml/slup264/slup264.pdf> DOI: 10.1108/IJSHE-03-2014-0042

## Description

### Technical Field

The present invention relates generally to a low-power universal input power supply, and more specifically to a power supply suitable for use with a ground-fault circuit interrupter (GFCI) protected circuit.

### Background

As more circuits are connected to ground-fault circuit interrupter (GFCI) breakers to add functionality (e.g. loT devices), reducing circuit cost and complexity may be difficult because of the sensitivity of some GFCI breakers. A GFCI breaker is designed to disconnect a circuit from the AC grid during certain conditions, such as when an imbalance between the input circuit and output circuit is detected, when a short circuit is detected, or when alternate electrical paths can create an electrical fault. GFCI circuits may have varying tolerances and sensitivities. A sensitive GFCI breaker may open under one set of conditions, whereas a less sensitive GFCI breaker may not open under the same set of conditions. Prior art is disclosed, for example, in US8629631B1 and GB2534816A.

### Summary of the invention

According to an aspect of the invention, there is provided a power supply according to claim 1, the power supply comprising:
a switched mode power converter comprising:
an input terminal for receiving an input voltage, and
an output terminal for supplying a power to a load;
   a control unit for controlling a switch of the switched mode power converter;
   a current-limited power supply for powering the control unit, the current-limited power supply being connected to the input voltage;
   whereby the control unit is configured to control an input current to the switched mode power converter.

By controlling the input current to the switched mode power supply, an unwanted or unnecessary opening of a GFCI breaker can be avoided.

### Brief description of the drawings

Figure 1 schematically shows a power supply according to the present invention.
Figure 2 schematically shows a rectified input voltage and a switch control voltage.
Figure 3a and 3b schematically show a rectified input voltage and two possible input currents.
Figure 4 schematically shows an output voltage of the power supply and an inrush current.

### Detailed Description

During power-on, a power supply can experience an excessive inrush current condition. If the power supply is connected to a sensitive GFCI breaker, the inrush current condition may cause the breaker to open, which results in a power disruption to the power supply and to the devices or systems connected to the power supply. If the power supply is connected to a less sensitive GFCI breaker, the breaker may not open. If the breaker does not open, then a person working on the system may experience a mild electric shock, which may startle the person and cause the person to lose their balance. The present invention avoids high inrush current by controlling the operation of a buck converter to limit and shape the input current. The switcher in a power supply, e.g. a switch in a switched mode power converter of the power supply, may lock up when there is an input power disruption or a maximum load on a low voltage output. The present invention addresses the lock up issue, by monitoring the output of the power supply and controlling a buck converter based on the output.

In the present invention, a power supply is proposed which comprises:
a switched mode power converter comprising:
an input terminal for receiving an input voltage, and
an output terminal for supplying a power to a load;
   a control unit for controlling a switch of the switched mode power converter;
   a current-limited power supply for powering the control unit, the current-limited power supply being connected to the input voltage;
   whereby the control unit is configured to control an input current to the switched mode power converter.

In an embodiment of the present invention, the control unit of the power supply, e.g. a controller or microcontroller unit (MCU) in the power supply, controls the switched mode power converter, e.g. a buck converter, at power up so that switched mode power converter, e.g. the buck converter, begins to operate after the input power is stable. During steady state operation, the control unit or MCU controls the operation of the buck converter to limit and shape the input current so that the root mean square (RMS) value of the input current is low and monitors the output voltage to prevent to open the GFCI .

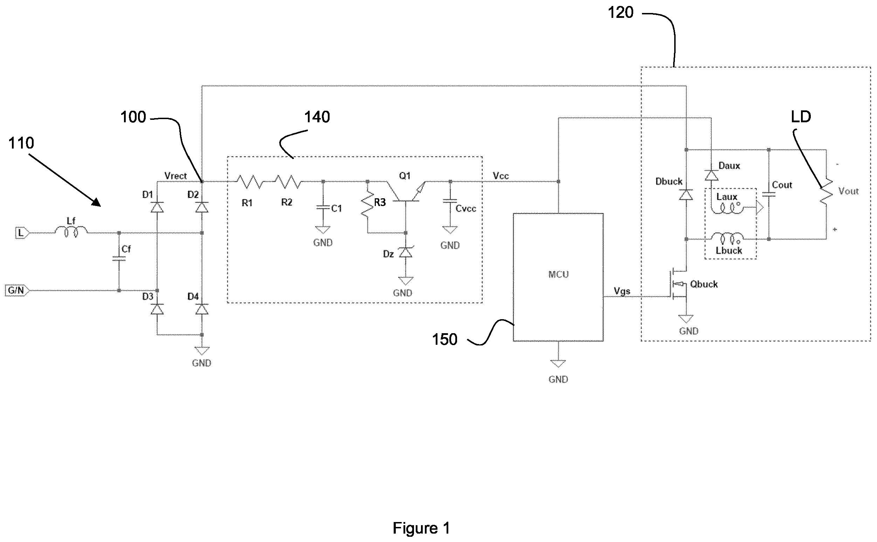

Referring now to the figures, FIG 1. illustrates an exemplary power supply according to the present invention. The power supply can be considered a low-power universal input power supply. The power supply may be a universal input power supply that is operable across a wide range of AC input voltages, e.g., 100-480 VAC, and across multiple frequencies, e.g., 50 -60 Hz. In the embodiment as shown, the power supply includes an AC input circuit, a linear regulator, a controller, and a buck converter.

**In general,** the power supply according to the present invention, is configured to receive an input voltage at an input terminal of the switched mode power converter of the power supply. In the embodiment as shown, the input voltage 100 corresponds to a rectified voltage Vrect, provided by an AC input circuit 110 to the switched mode power converter 120, i.e. a buck converter.

The AC input circuit 110 includes inductor Lf, capacitor Cf and diodes D1, D2, D3, and D4. The AC input circuit 110 has input terminals L indicating a line voltage and G/N indicating a ground or neutral connection. The inductor and the capacitor provide input filtering and help limit the inrush current. The diodes form a rectifier and provide a rectified voltage Vrect to the linear regulator 130 and the buck converter 120.

The power supply as shown comprises further a linear regulator 140, which can be considered an example of a current-limited power supply, that includes resistors R1, R2, R3, capacitors C1 and Cvcc, transistor Q1, and zener diode Dz. In some examples, a switched-mode regulator could also be used instead of a linear regulator 140. The buck converter 120 includes inductors, Lbuck and Laux, diodes Dbuck and Daux, MOSFET Qbuck, and capacitor Cout. Inductor Laux and diode Daux are part of an auxiliary circuit within the buck converter 120. As shown in FIG. 1, the controller or control unit 150 may be an MCU. An output of the MCU, Vgs, controls Qbuck. The load connected at Vout is "floating" with regard to the local ground GND in FIG. 1.

During power-up, the linear regulator 140 increases the voltage Vcc as the AC input voltage increases. The charging current in the linear regulator 140 is limited by resistors R1, R2. In one example, the value of the resistors is on the order of 1 MΩ and the charging current is limited to 50 □A. Once Vcc reaches a sufficient level to power the MCU, the MCU 150 begins operating.

When the MCU 150 begins operating, it uses default parameters, such as a default on-time and a default switching time, to generate Vgs and to control the buck converter 120. Once the MCU begins generating Vgs, the buck convertor 120 begins operating and powers the load LD connected to Vout using power from the rectifier.

While the buck converter 120 is operating, the auxiliary circuit in the buck converter 120 provides Vcc to the MCU. The linear regulator 140 no longer powers the MCU 150 to reduce the loss of the regulator 140. The energy from auxiliary winding Laux, which is coupled to the buck inductor Lbuck charges capacitor Cvcc. The voltage at capacitor Cvcc corresponds to the output voltage Vout. For example, the voltage at capacitor Cvcc may approximate the output voltage Vout but be slightly lower since there is a small voltage drop across the auxiliary diode, Daux. in an embodiment of the present invention, the MCU 150 monitors the output voltage Vout by monitoring Vcc and controls Vgs based on the output voltage.

An optional voltage divider may be included in the power supply of FIG. 1. The voltage divider may be connected between the AC input circuit 110 and the linear regulator 140 between Vrect and ground. The output of the voltage divider may be provided as an input to the MCU. The MCU can use the output of the voltage divider to monitor the input voltage and can consider the input voltage in addition to the voltage at capacitor Cvcc to control Vgs. The power supply of FIG. 1 may have a neutral or earth ground return. The neutral return may be appropriate for an installation in new construction and the earth ground return may be appropriate for a retrofit installation. The maximum leakage current for the power supply of FIG. 1 does not exceed 500 µA to earth ground.

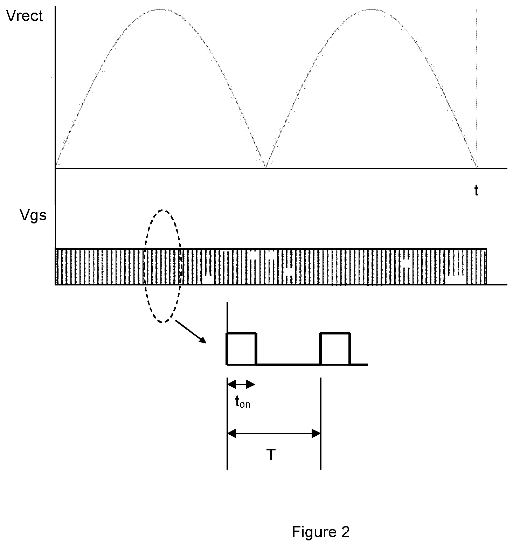

FIG. 2 depicts a plot of Vrect and Vgs. In the particular example of FIG. 2, the pulse width is a constant, however, the MCU may also vary the on-time ton (e.g., the duty cycle ton/T) of Vgs based on Vcc and optionally Vrect. The operation of the buck converter is determined by the on-time and the switching time T of Vgs.

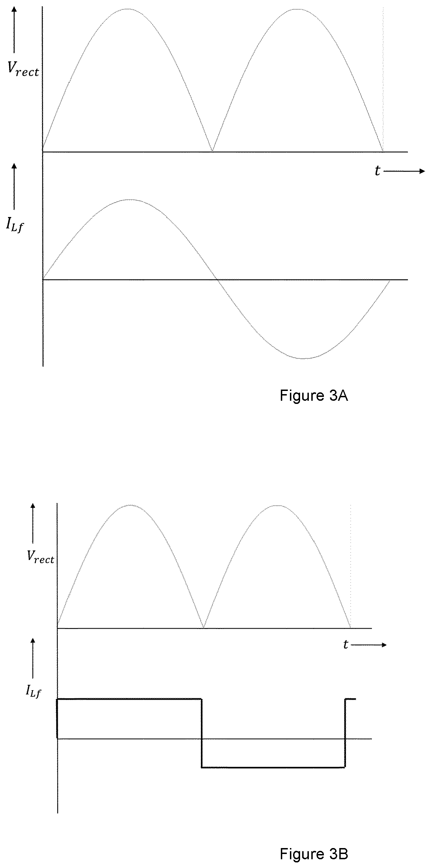

FIG. 3A illustrates a plot of the rectified voltage Vrect and a current ILf in the filtering inductor Lf. when the duty cycle and switching time are constant. The input current ILf is sinusoidal.

FIG. 3B illustrates how control of the buck converter 120 can limit and shape the input current ILf . FIG. 3B illustrates a plot of the rectified voltage Vrect and a current ILf in the filtering inductor Lf. when the duty cycle of Vgs changes. The MCU 150 may vary the duty cycle to shape the waveforms from FIG. 3A into the waveforms shown by FIG. 3B. For instance, the duty cycle of Vgs approaches a maximum value near the zero crossings of Vrect and approaches a minimum value near the peak values of Vrect. In the particular example illustrated by FIG. 3A, duty cycle and switching time are constant. Other implementations with varying shapes of ILf are, however, possible. Minimizing the RMS current value through Lf is preferable when the power supply uses an earth ground return. In one example, a peak of Vrect is 120 VAC with an on-time between approximately 375 ns and 2.5 µs. In another example, a peak of Vrect is 277 VAC with an on-time between approximately 188 ns and 1 µs. In these examples, the switching frequency is approximately 40 kHz. While a square waveform is illustrated in Fig. 3B., other waveforms may be used. The minimum RMS value is obtained for the square waveform shown in Fig. 3B.

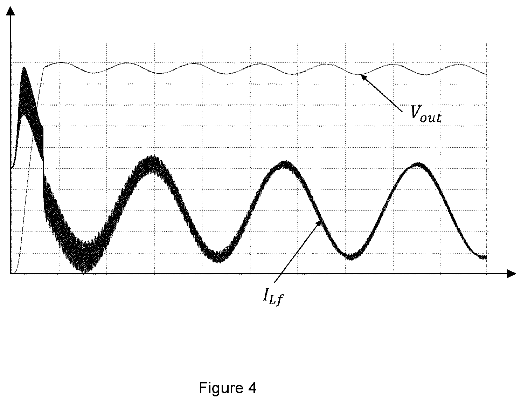

FIG. 4 illustrates a startup cycle of the power supply. FIG. 4 depicts a load voltage Vout and a current ILf in the filtering inductor of the AC input circuit 110. At power-up, the buck converter 120 is in an off state because the MCU 150 is not yet operating. Once Vcc is sufficient to power the MCU 150, the MCU 150 begins generating Vgs using a default duty cycle and switching time and the buck converter 120 begins operating. Once in steady-state operation, the MCU controls the duty cycle of Vgs to limit the input current. In the example, the peak current of ILf at power-up is approximately double the steady state maximum. As illustrated in FIG. 4, the inrush current is limited while the load voltage Vout remains a consistent waveform.

Power supplies such as those described herein may be connected in parallel to a GFCI protected circuit. In one implementation, up to four power supplies according to the present invention may be connected in parallel to a circuit with a sensitive GFCI breaker. The power supply limits the inrush current so that the GFCI breaker does not trip during power-up due to excessive inrush current and the control unit or controller 150 of the power supply controls the switched mode power converter, e.g. buck convertor 120, so that the buck convertor 120 does not lock up due to power disruptions or when there is a maximum load on a low voltage output.

Although the foregoing describes exemplary implementations, other implementations are possible. It will be appreciated that those skilled in the art, upon attaining an understanding of the foregoing, may readily produce alterations to, variations of, and equivalents to, the described aspects. Accordingly, it should be understood that the present disclosure has been presented for purposes of example rather than limitation and does not preclude inclusion of such modifications, variations, and/or additions to the present subject matter as would be readily apparent to one of ordinary skill in the art.

## Claims

1. A power supply comprising:
a switched mode power converter (120) comprising:
an input terminal for receiving an input voltage (100);
an output terminal for supplying a power to a load (LD);
a control unit (150) for controlling a switch (Qbuck) of the switched mode power converter: a current-limited power supply for powering the control unit, the current-limited power supply being connected to the input voltage, the current-limited power supply comprising a linear regulator (140);
wherein the control unit is configured to control an input current to the switched mode power converter;
wherein the linear regulator comprises one or more resistors (R1, R2) for limiting an input current to the linear regulator during start-up or power-up;
wherein the control unit is configured to limit the input current, in particular an RMS value of the input current, to remain below a predetermined value, by controlling the duty cycle of the switch of the switched mode power converter, after start-up or power-up;
wherein the switched mode power converter comprises an inductor (Lbuck);
wherein the switched mode power converter comprises an auxiliary circuit configured to power the control unit;
wherein the auxiliary circuit comprises an auxiliary inductor (Laux) magnetically coupled to the inductor;
wherein the auxiliary circuit is configured to charge a capacitor (Cvcc) of the current-limited power supply, the capacitor being configured to power the control unit;
wherein the control unit is configured to monitor an output voltage (vₒᵤₜ) of the power supply based on a voltage of the capacitor which approximates the output voltage;
wherein the control unit is configured to control the switch of the switched mode power converter, based on the voltage of the capacitor.

2. The power supply according to claim 1, wherein the control unit is further configured to shape the input current.

3. The power supply according to any of the preceding claims, wherein the linear regulator further comprises a capacitor.

4. The power supply according to claim 3, wherein the capacitor is configured to be charged by at least part of the input current to the linear regulator and wherein the capacitor is configured to supply power to the control unit.

5. The power converter according to any of the preceding claims, wherein the current-limited power supply comprises a switched mode regulator.

6. The power supply according to any of the preceding claims, wherein the switched mode power supply comprises a Buck converter, a Boost converter or a Buck/Boost converter.

7. The power supply according to claim 1, wherein the current-limited power supply is configured to power the control unit during start-up or power-up and wherein the auxiliary circuit is configured to power the control unit after start-up or after power-up.

8. The power supply according to any of the preceding claims, wherein the input voltage is a rectified AC voltage.

9. The power supply according to claim 8, further comprising an AC input circuit for converting an AC input voltage to the rectified AC voltage.

## Patentansprüche

1. Leistungsversorgung, die Folgendes umfasst:
einen Schaltstromwandler (120), der Folgendes umfasst:
einen Eingangsanschluss zum Empfangen einer Eingangsspannung (100);
einen Ausgangsanschluss zum Zuführen von Leistung zu einer Last (LD);
eine Steuereinheit (150) zum Steuern eines Schalters (Qbuck) des Schaltstromwandlers;
eine strombegrenzte Leistungsversorgung zum Versorgen der Steuereinheit mit Leistung, wobei die strombegrenzte Leistungsversorgung mit der Eingangsspannung verbunden ist, wobei die strombegrenzte Leistungsversorgung einen Linearregler (140) umfasst;
wobei die Steuereinheit dazu ausgelegt ist, einen Eingangsstrom zu dem Schaltstromwandler zu steuern;
wobei der Linearregler einen oder mehrere Widerstände (R1, R2) zum Begrenzen eines Eingangsstroms zu dem Linearregler während des Anfahrens oder Hochfahrens umfasst;
wobei die Steuereinheit dazu ausgelegt ist, den Eingangsstrom, insbesondere einen Effektivwert des Eingangsstroms, zu begrenzen, um unter einem vorbestimmten Wert zu bleiben, indem das Tastverhältnis des Schalters des Schaltstromwandlers nach dem Anfahren oder Hochfahren gesteuert wird;
wobei der Schaltstromwandler eine Induktivität (Lbuck) umfasst;
wobei der Schaltstromwandler eine Hilfsschaltung umfasst, die dazu ausgelegt ist, die Steuereinheit mit Leistung zu versorgen;
wobei die Hilfsschaltung eine Hilfsinduktivität (Laux) umfasst, die magnetisch mit der Induktivität gekoppelt ist;
wobei die Hilfsschaltung dazu ausgelegt ist, einen Kondensator (CVCC) der strombegrenzten Leistungsversorgung zu laden, wobei der Kondensator dazu ausgelegt ist, die Steuereinheit mit Leistung zu versorgen;
wobei die Steuereinheit dazu ausgelegt ist, eine Ausgangsspannung (vₒᵤₜ) der Leistungsversorgung basierend auf einer Spannung des Kondensators zu überwachen, die sich der Ausgangsspannung annähert;
wobei die Steuereinheit dazu ausgelegt ist, den Schalter des Schaltstromwandlers basierend auf der Spannung des Kondensators zu steuern.

2. Leistungsversorgung nach Anspruch 1, wobei die Steuereinheit ferner dazu ausgelegt ist, den Eingangsstrom zu formen.

3. Leistungsversorgung nach einem der vorhergehenden Ansprüche, wobei der Linearregler ferner einen Kondensator umfasst.

4. Leistungsversorgung nach Anspruch 3, wobei der Kondensator dazu ausgelegt ist, durch mindestens einen Teil des Eingangsstroms zu dem Linearregler geladen zu werden, und wobei der Kondensator dazu ausgelegt ist, der Steuereinheit Leistung zuzuführen.

5. Leistungswandler nach einem der vorhergehenden Ansprüche, wobei die strombegrenzte Leistungsversorgung einen Schaltmodusregler umfasst.

6. Leistungsversorgung nach einem der vorhergehenden Ansprüche, wobei die Schaltleistungsversorgung einen Abwärtswandler, einen Aufwärtswandler oder einen Abwärts-/Aufwärtswandler umfasst.

7. Leistungsversorgung nach Anspruch 1, wobei die strombegrenzte Leistungsversorgung dazu ausgelegt ist, die Steuereinheit während des Anfahrens oder Hochfahrens mit Leistung zu versorgen, und wobei die Hilfsschaltung dazu ausgelegt ist, die Steuereinheit nach dem Anfahren oder nach dem Hochfahren mit Leistung zu versorgen.

8. Leistungsversorgung nach einem der vorhergehenden Ansprüche, wobei die Eingangsspannung eine gleichgerichtete Wechselspannung ist.

9. Leistungsversorgung nach Anspruch 8, die ferner eine Wechselstrom-Eingangsschaltung zum Umwandeln einer Wechselstrom-Eingangsspannung in die gleichgerichtete Wechselspannung umfasst.

## Revendications

1. Alimentation en puissance, comprenant :
un convertisseur de puissance en mode commuté (120) comprenant :
une borne d'entrée destinée à recevoir une tension d'entrée (100) ;
une borne de sortie destinée à effectuer l'alimentation en une puissance à une charge (LD) ;
une unité de commande (150) destinée à commander un commutateur (Qbuck) du convertisseur de puissance en mode commuté ;
une alimentation en puissance limitée en courant pour fournir une puissance à l'unité de commande, l'alimentation en puissance limitée en courant étant connectée à la tension d'entrée, l'alimentation en puissance limitée en courant comprenant un régulateur linéaire (140) ;
dans laquelle l'unité de commande est configurée pour commander un courant d'entrée vers le convertisseur de puissance en mode commuté ;
dans laquelle le régulateur linéaire comprend une ou plusieurs résistances (R1, R2) pour limiter un courant d'entrée vers le régulateur linéaire durant le démarrage ou la mise en marche ;
dans laquelle l'unité de commande est configurée pour limiter le courant d'entrée, en particulier une valeur RMS du courant d'entrée, pour rester sous une valeur prédéterminée, en commandant le facteur d'utilisation du commutateur du convertisseur de puissance en mode commuté, après le démarrage ou la mise en marche ;
dans laquelle le convertisseur de puissance en mode commuté comprend un inducteur (Lbuck) ;
dans laquelle le convertisseur de puissance en mode commuté comprend un circuit auxiliaire configuré pour fournir une puissance à l'unité de commande ;
dans laquelle le circuit auxiliaire comprend un inducteur auxiliaire (Laux) couplé magnétiquement à l'inducteur ;
dans laquelle le circuit auxiliaire est configuré pour charger un condensateur (Cvcc) de l'alimentation en puissance limitée en courant, le condensateur étant configuré pour fournir une puissance à l'unité de commande ;
dans laquelle l'unité de commande est configurée pour surveiller une tension de sortie (vₒᵤₜ) de l'alimentation en puissance sur la base d'une tension du condensateur qui se rapproche de la tension de sortie ;
dans laquelle l'unité de commande est configurée pour commander le commutateur du convertisseur de puissance en mode commuté, sur la base de la tension du condensateur.

2. Alimentation en puissance selon la revendication 1, dans laquelle l'unité de commande est en outre configurée pour mettre en forme le courant d'entrée.

3. Alimentation en puissance selon quelconques des revendications précédentes, dans laquelle le régulateur linéaire comprend en outre un condensateur.

4. Alimentation en puissance selon la revendication 3, dans laquelle le condensateur est configuré pour être chargé par au moins une partie du courant d'entrée vers le régulateur linéaire et dans laquelle le condensateur est configuré pour effectuer l'alimentation en puissance à l'unité de commande.

5. Convertisseur de puissance selon quelconques des revendications précédentes, dans laquelle l'alimentation en puissance limitée en courant comprend un régulateur en mode commuté.

6. Alimentation en puissance selon quelconques des revendications précédentes, dans laquelle l'alimentation en puissance en mode commuté comprend un convertisseur dévolteur, un convertisseur survolteur, ou un convertisseur dévolteur-survolteur.

7. Alimentation en puissance selon la revendication 1, dans laquelle l'alimentation en puissance limitée en courant est configurée pour fournir une puissance à l'unité de commande durant le démarrage ou la mise en marche et dans laquelle le circuit auxiliaire est configuré pour fournir une puissance à l'unité de commande après le démarrage ou après la mise en marche.

8. Alimentation en puissance selon quelconques des revendications précédentes, dans laquelle la tension d'entrée est une tension CA redressée.

9. Alimentation en puissance selon la revendication 8, comprenant en outre un circuit d'entrée CA pour convertir une tension d'entrée CA en tension CA redressée.
